# EUROPÄISCHE PATENTSCHRIFT

(11) **EP 0 841 847 B1**
(45) Veröffentlichungstag und Bekanntmachung des Hinweises auf die Patenterteilung: **03.03.1999**
(21) Anmeldenummer: 96928392.8
(22) Anmeldetag: 30.07.1996
(51) Int. Cl.: A01D 69/02

(54) **AKKU-RASENMÄHER**
ACCUMULATOR-POWERED LAWN MOWER
TONDEUSE A GAZON A ACCUMULATEURS

(30) Priorität: 01.08.1995 DE 19528166
(43) Veröffentlichungstag der Anmeldung: 20.05.1998
(73) Patentinhaber: WOLF-Geräte GmbH Vertriebsgesellschaft KG, D-57518 Betzdorf/Sieg (DE)
(72) Erfinder: WOLF, Gregor, D-57517 Betzdorf (DE)
(74) Vertreter: Koch, Günther, Dipl.-Ing.
(86) Internationale Anmeldenummer: EP9603349
(87) Internationale Veröffentlichungsnummer: WO9704637

(56) Entgegenhaltungen:
- EP-A- 0 466 306
- WO-A-96/05719
- DE-A- 2 210 557
- DE-C-19 528 167
- DE-U- 9 313 032
- FR-A- 2 661 066
- US-A- 3 973 378

## Beschreibung

Die Erfindung bezieht sich auf einen Rasenmäher mit einem durch eine aufladbare Batterie gespeisten Elektromotor zum Antrieb der Schneidwerkzeuge mit den im Oberbegriff des Patentanspruchs 1 angegebenen Merkmalen. Ein solcher Rasenmäher ist aus der WO 95/08 256 bekannt. Hierbei sind die Verbindungskontakte zwischen Batterie und Chassis als Steckkontakte ausgebildet, und diese Steckkontakte bilden gleichzeitig die mechanischen Festlegemittel, die die Batterie in einer Halterung des Rasenmäherchassis festlegen sollen. Dabei sind die am Batteriedeckel festgelegten Kontaktbuchsen in diesem Deckel schwimmend, d. h. seitlich verschiebbar, gelagert, damit auch bei nicht zielgenauem Aufsetzen auf die Stiftstecker im Rasenmäherchassis eine Kontaktierung erfolgen kann. Infolge der schwimmenden Lagerung ist eine mechanische Festlegung der Batterie im Chassis nur begrenzt möglich. Auch ist insbesondere bei auftretenden Vibrationen eine sichere Kontaktgabe nicht gewährleistet, insbesondere wenn man die hohen Ströme berücksichtigt, die im Betrieb eines solchen Rasenmähers fließen.

Die US-PS 3 973 378 beschreibt einen gattungsgemäßen Rasenmäher, bei dem die elektrischen Kontakte als Steckkontakte ausgebildet sind und von diesem getrennt mechanische Festlegemittel die Batterie im horizontalen Einschubschacht formschlüssig festlegen. Die formschlüssigen Festlegemittel bestehen aus einer Rastnase, die in der Einschubstellung einrastet. Der Kontaktdruck wird durch den Kontaktdruck der Kontaktbuchsen bestimmt.

Der Erfindung liegt die Aufgabe zugrunde, einen gattungsgemäßen Rasenmäher hinsichtlich der elektrischen Kontaktgabe zwischen Batterieanschluß und Rasenmäheranschluß derart auszubilden, daß bei leichter Entnahme und leichtem Einsetzen der Batterie eine dauerhaft sichere elektrische Kontaktgabe gewährleistet ist.

Gelöst wird die gestellte Aufgabe durch die im Kennzeichnungsteil des Patentanspruchs 1 angegebenen Merkmale. Dadurch, daß die Kontakte als Schleifkontakte ausgebildet sind, ergibt sich beim Einsetzen eine Selbstreinigung, und die zusätzlich auf die Schleifkontaktfedern einwirkenden Druckfedern erhöhen den Kontaktdruck in wünschenswerter Weise, ohne das Einschieben und Herausnehmen der Batterie aus dem Schacht zu behindern.

Dadurch, daß die mechanischen Festlegemittel von den elektrischen Kontaktierungsmitteln getrennt sind, ergibt sich bei zuverlässiger Kontaktgabe die Möglichkeit einer formschlüssigen Verriegelung, die automatisch beim Erfassen des Handgriffs geöffnet wird, da gemäß einer Ausgestaltung der Erfindung die Verriegelungsmittel bewegungsschlüssig mit dem Handgriff gekuppelt sind.

Weitere Ausgestaltungen der Erfindung ergeben sich aus den Unteransprüchen.

Nachstehend wird ein Ausführungsbeispiel der Erfindung anhand der Zeichnung beschrieben. In der Zeichnung zeigen:
Fig. 1 eine schematische Darstellung der in einem Rasenmäher eingesetzten Batterie mit den Festlegemitteln;
Fig. 2 eine schematische Darstellung der Batterie mit den Kontaktierungsmitteln;
Fig. 3 eine Perspektivische Darstellung der mit dem Handgriff gekuppelten Verriegelungsmittel;
Fig. 4 eine Perspektivische, teilweise aufgebrochene Ansicht des Batterieschachts eines Rasenmähers mit elastisch abgestützter Batterie;
Fig. 5 einen Teilvertikalschnitt der Batteriehalterung und Batteriekontaktierung.

In der Zeichnung sind nur die erfindungswesentlichen Teile dargestellt, nämlich die Batterie, die Batteriehalterung und -verriegelung sowie die Kontaktierung, während die Einzelteile des Rasenmähers lediglich andeutungsweise angegeben sind. Der Rasenmäher, der auf seinem Chassis den Schacht zum Einsetzen der Batterie aufweist, kann in verschiedener Weise ausgebildet sein. Er besitzt in bekannter Weise einen Elektromotor, der durch die Batterie 10 über nicht dargestellte Verbindungskabel gespeist wird. Die Batterie 10 ist ein elektrochemisches Sekundärelement, und hierfür kommen in erster Linie Nickelcadmiumbatterien oder Bleibatterien in Betracht. Die Batterie befindet sich in einem Gehäuse, und das Bezugszeichen 10 bezeichnet das Gehäuse mit eingebauter Batterie.

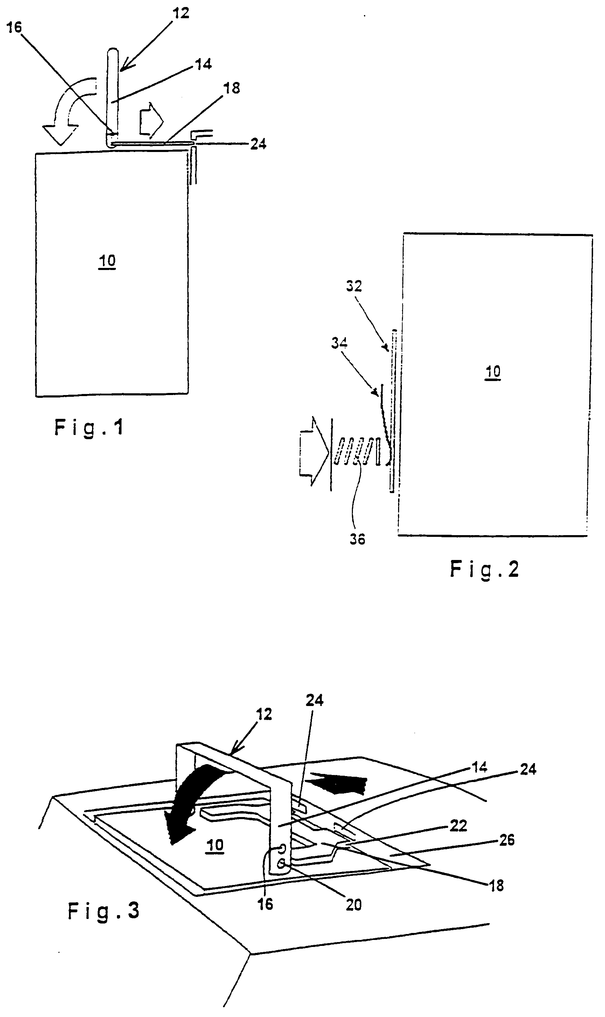

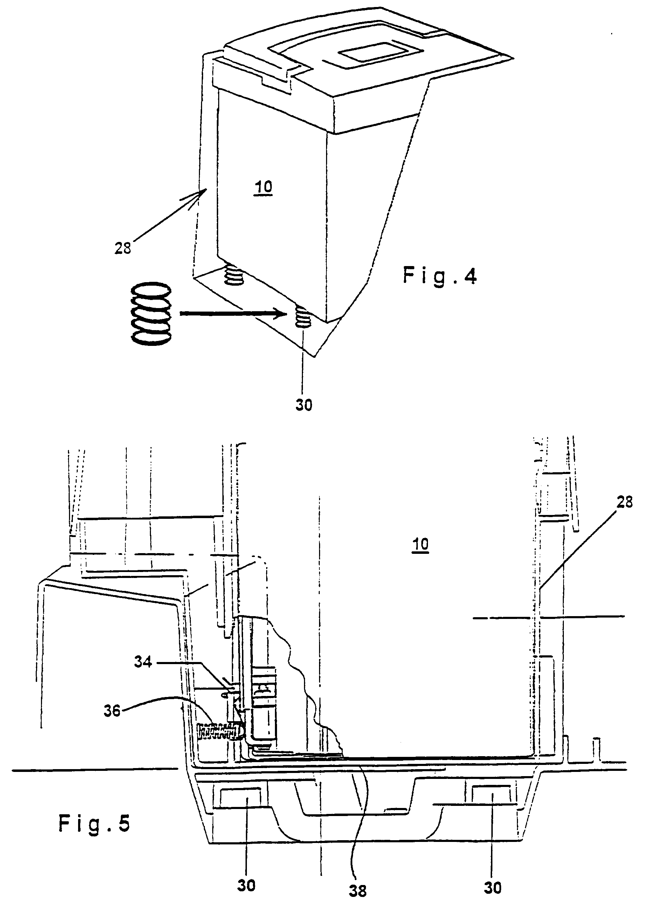

Das Batteriegehäuse trägt einen Handgriff 12, dessen Seitenschenkel 14 um eine Achse 16 schwenkbar sind. An dem unter der Schwenkachse 16 liegenden Teil der Schenkel 14 sind die Schenkel eines Bügels 18 um eine Achse 20 angelenkt, die unter der Achse 16 liegt. Dieser Bügel 18 weist einen oder mehrere, z.B. zwei, Sperriegel 22 auf, die in Bereitschaftsstellung des Mähers in Formschlußausnehmungen 24 eingreifen, die in einer Wand 26 eines Batterieschachtes 28 angeordnet sind, in den die Batterie mit Gehäuse einsetzbar ist. Wie insbesondere aus den Fig. 1 und 3 ersichtlich, werden die Sperriegel 22 durch Umlegen des Handgriffs 12 in die Formschlußausnehmungen 24 eingeschoben, wodurch die Batterie in vertikaler Richtung formschlüssig gesichert wird. Nach Kochkippen des Handgriffs 12 in die aus Fig. 1 und 2 ersichtliche Lage kann die Batterie dem Schacht entnommen und in diesen wieder eingesetzt werden. Die Batterie 10 ruht auf dem Boden des Schachtes (28) auf elastischen Stützmitteln. Diese können aus elastischem Material, beispielsweise aus Schaumstoff, ausgebildet sein oder Federn aufweisen. Gemäß dem in Fig. 4 dargestellten Ausführungsbeispiel bestehen die Stützmittel aus Druckschraubenfedern 30. Diese elastischen Stützmittel verhindern ein schlagartiges Aufsetzen auf den Schachtboden und schützen die Batterie (10) gegen Vibrationen. Um zu gewährleisten, daß die Batterie immer richtig in den Batterieschacht eingesetzt wird, sind in der Zeichnung nicht dargestellte Führungsmittel in Gestalt vertikaler Rippen und Nuten vorgesehen. Auch ist eine entsprechende Eckausbildung von Batteriegehäuse und Batterieschacht denkbar.

Die Stützmittel (30) spannen die Batterie (10) bzw. ihr Gehäuse gegen die Verriegelungsmittel (22) vor, so daß die Batterie (10) im Betrieb sicher fixiert bleibt.

Zur Kontaktierung trägt die Batterie (10) bzw. ihr Gehäuse in einer Seitenwand mehrere Kontaktfahnen 32, die in Vertikalrichtung parallel zueinander verlaufend vorgesehen sind. Im Batterieschacht (28) ist eine entsprechende Anzahl von Kontaktfedern 34 angeordnet Diese als Blattfedern auSgebildeten Kontaktfedern 34 sind an ihrem oberen Ende eingespannt und liegen den Kontaktfahnen 32 der eingesetzten Batterie (10) unter Vorspannung an. Diese Vorspannung wird durch Druckfedern 36 erhöht, die auf die Kontaktfedern einwirken und eine sichere Kontaktgabe auch bei den hohen im Betrieb fließenden Strömen gewährleisten

Wie ersichtlich, sind die Kontaktierungsmittel 32, 34, 36 von den mechanischen Verriegelungsmitteln 18, 22, 24 getrennt. Die Schleifkontaktausbildung gewährleistet jeweils beim Einsetzen und beim Herausnehmen der Batterie (10) eine Selbstreinigung der Kontakte. Selbst wenn im Betrieb aus irgendwelchen Gründen eine Bewegung zwischen Batterie (10) bzw. Batteriegehäuse und Batterieschacht (28) stattfindet, so wird dadurch die Stromübertragung nicht gestört, weil allenfalls ein Schleifen der Kontakte 32 und 34 aufeinander erfolgt.

Wie aus Fig. 5 ersichtlich, können die Stützfedern 30 auf eine Trägerplatte 38 wirken, die den Batterieschachtboden bildet und die Batterie bzw. deren Gehäuse abstützt.

Gemäß dem dargestellten Ausführungsbeispiel ist der Batterieschacht (28) im Rasenmäherchassis in vertikaler Anordnung vorgesehen. Es ist jedoch auch denkbar, den Schacht horizontal auszubilden, wobei die Stützmittel, die Verriegelungsmittel und die Kontaktmittel in entsprechender Weise so auszubilden sind, daß ein Seitliches Einschieben mit einer Schleifkontaktverbindung und einer seitlichen Verriegelung zustandekommt.

### Bezugszeichenliste

- 10: Batterie(gehäuse)
- 12: Handgriff
- 14: Seitenschenkel
- 16: Achse
- 18: Bügel
- 20: Achse
- 22: Sperriegel
- 24: Formschlußausnehmungen
- 26: Wand
- 28: Batterieschacht
- 30: Druckschraubenfedern
- 32: Kontaktfahnen
- 34: Kontaktfedern
- 36: Druckschraubenfedern
- 38: Trägerplatte

## Patentansprüche

1. Rasenmäher mit einem durch eine aufladbare Batterie gespeisten Elektromotor zum Antrieb der Schneidwerkzeuge und fakultativ als Fahrantrieb mit den folgenden Merkmalen:
- es ist eine Halterung (28) für die Batterie (10) am Rasenmäher-Chassis vorgesehen;
- die Batterie (10) ist mit einem Handgriff (12) versehen, mit dem sie aus der Halterung (28) entnommen und in diese eingesetzt werden kann;
- die Batterie (10) weist elektrische Kontakte (32) auf, die beim Einsetzen der Batterie (10) in die Halterung (28) mit Gegenkontakten (34) des Antriebskreises in Kontaktberührung kommen;
- die Batterie wird durch mechanische Festlegemittel (22) in der Halterung gesichert, wobei die Festlegemittel (22) unabhängig von den Kontaktierungsmitteln sind,
dadurch gekennzeichnet, daß die elektrischen Kontakte der Batterie (10) als in Einschubrichtung parallel zueinander verlaufende Kontaktfahnen (32) ausgebildet sind und die Gegenkontakte von Schleifkontaktfedern (34) gebildet sind, die individuell durch Druckfedern (36) im Sinne einer Erhöhung des Kontaktdruckes abgestützt sind.

2. Rasenmäher nach Anspruch 1,
dadurch gekennzeichnet, daß die aufeinander schleifenden Kontakte (32, 34) in Bodennähe von Batterie (10) und der als Batterieschacht (28) ausgebildeten Halterung angeordnet sind.

3. Rasenmäher nach den Ansprüchen 1 und 2,
dadurch gekennzeichnet, daß die unabhängig von den elektrischen Kontakten (32, 34) wirkenden Festlegemittel (22) Formschlußausnehmungen (24) im Batterieschacht (28) und Sperriegel (22) aufweisen, die mit dem Handgriff (12) derart gekuppelt sind, daß sie beim Umlegen des Griffes (12) ineinandergreifen und beim Hochheben des Griffes entriegelt werden.

4. Rasenmäher nach einem der Ansprüche 1 bis 3,
dadurch gekennzeichnet, daß am Boden des Batterieschachtes (28) elastische Stützmittel (30) angeordnet sind.

5. Rasenmäher nach den Ansprüchen 3 und 4,
dadurch gekennzeichnet, daß die elastischen Stützmittel (30) die Sperriegel (22) gegen den Rand der Formschlußausnehmungen (24) vorspannen und als Druckschraubenfedern (30) ausgebildet sind, die unmittelbar oder mittelbar auf den Batterieboden einwirken.

6. Rasenmäher nach Anspruch 1,
dadurch gekennzeichnet, daß der Batterie (10) ein Ladegerät mit Batterieschacht und durch Federn (36) unterstützten Schleifkontakten (34) zugeordnet ist.

7. Rasenmäher nach einem der Ansprüche 3 oder 5,
dadurch gekennzeichnet, daß die Batterie (10) von einem Gehäuse umschlossen ist, das den Handgriff (12), die Schleifkontakte (32) und die Sperriegel (22) lagert.

8. Rasenmäher nach einem der Ansprüche 1 bis 7,
dadurch gekennzeichnet, daß Batteriegehäuse und Batterieschacht (28) mit einander entsprechenden Paßorientierungsflächen ausgerüstet sind.

## Claims

1. Lawnmower with an electric motor powered by a rechargeable battery for driving the cutting tools and optionally as a propulsive drive unit, comprising the following features:
- a mounting (28) is provided for the battery (10) on the lawnmower chassis;
- the battery (10) is provided with a handle (12) by means of which it can be removed from the mounting (28) and inserted thereinto;
- the battery (10) incorporates electrical contacts (32) which touch and create a contact with mating contacts (34) on the drive circuit as the battery (10) is being inserted into the mounting (28);
- the battery is secured in the mounting by mechanical locating means (22), the locating means (22) being independent of the contact-making means,
characterised in that the electrical contacts of the battery (10) are configured as contact lugs (32) extending parallel to one another in the direction of insertion, and the mating contacts are constituted by sliding-action contact springs (34) which are individually supported by helical compression springs (36) so as to increase the contact pressure.

2. Lawnmower as claimed in claim 1,
characterised in that the contacts (32, 34) which slide over one another are arranged near to the floor of the battery (10) and the mounting configured as the battery well (28).

3. Lawnmower as claimed in claims 1 and 2,
characterised in that the locating means (22) which operate independently of the electrical contacts (32, 34) incorporate form-closure rebates (24) in the battery well (28) and safety catches (22) which are coupled to the handle (12) in such a manner that they intermesh with one another when the handle (12) is folded down and are released when the handle is raised.

4. Lawnmower as claimed in any of claims 1 to 3,
characterised in that flexible support means (30) are arranged on the floor of the battery well (28).

5. Lawnmower as claimed in claims 3 and 4,
characterised in that the flexible support means (30) pretension the safety catches (22) against the rim of the form-closure rebates (24) and are in the form of pressing screw springs (30) which act directly or indirectly on the battery floor.

6. Lawnmower as claimed in claim 1,
characterised in that associated with the battery (10) is a charger with battery well and sliding-action contacts (34) assisted by springs (36).

7. Lawnmower as claimed in any of claims 3 or 5,
characterised in that the battery (10) is surrounded by an enclosure which stores the handle (12), the sliding-action contacts (32) and the safety catches (22).

8. Lawnmower as claimed in any of claims 1 to 7,
characterised in that the battery enclosure and the battery well (28) are equipped with mutually corresponding fit alignment surfaces.

## Revendications

1. Tondeuse à gazon comprenant, pour l'entraînement des outils de coupe, et facultativement pour la propulsion de la tondeuse, un moteur électrique alimenté par un accumulateur rechargeable, ayant les caractéristiques suivantes :
- un logement (28) est prévu pour l'accumulateur (10) sur le châssis de la tondeuse ;
- une poignée (12) est prévue sur l'accumulateur (10) pour permettre de retirer ce dernier du logement (28) et de le mettre en place dans le logement ;
- l'accumulateur (10) présente des contacts électriques (32) qui, lors de la mise en place de l'accumulateur (10) dans le logement (28), entrent en contact avec des contacts complémentaires (34) du circuit d'entraînement ;
- l'accumulateur est immobilisé dans le logement par des moyens de fixation mécanique (22), lesquels sont indépendants des moyens de contact,
**caractérisée** par le fait que les contacts électriques de l'accumulateur (10) sont réalisés sous forme de pistes de contact (32) s'étendant parallèlement les unes aux autres dans la direction d'insertion et que les contacts complémentaires sont constitués par des contacts frotteurs élastiques (34) sollicités individuellement par des ressorts de pression (36) dans le sens d'un accroissement de la pression de contact.

2. Tondeuse à gazon suivant la revendication 1, **caractérisée** par le fait que les contacts (32, 34) frottant les uns sur les autres sont disposés dans la zone de fond de l'accumulateur (10) et du logement réalisé sous forme de puits d'accumulateur (28).

3. Tondeuse à gazon suivant les revendications 1 et 2, **caractérisée** par le fait que les moyens de fixation (22) agissant indépendamment des contacts électriques (32, 34) comprennent des évidements de verrouillage (24) dans le puits d'accumulateur (28) et des verrous (22) qui sont couplés avec la poignée (12) de manière que lesdits verrous pénètrent dans lesdits évidements lors du rabattement de la poignée (12) et sont déverrouillés lors du relèvement de la poignée.

4. Tondeuse à gazon suivant l'une des revendications 1 à 3, **caractérisée** par le fait que des moyens de support (30) élastiques sont disposés au fond du puits d'accumulateur (28).

5. Tondeuse à gazon suivant les revendications 3 et 4, **caractérisée** par le fait que les moyens de support (30) élastiques sollicitent les verrous (22) contre le bord des évidements (24) et sont réalisés sous forme de ressorts hélicoïdaux de compression (30) agissant directement ou indirectement sur le fond de l'accumulateur.

6. Tondeuse à gazon suivant la revendication 1, **caractérisée** par le fait qu'un chargeur avec un puits d'accumulateur et avec des contacts frotteurs (34) sollicités par des ressorts (36) est associé à l'accumulateur (10).

7. Tondeuse à gazon suivant l'une des revendications 3 ou 5, **caractérisée** par le fait que l'accumulateur (10) est entouré d'un boîtier sur lequel sont montés la poignée (12), les contacts frotteurs (32) et les verrous (22).

8. Tondeuse à gazon suivant l'une des revendications 1 à 7, **caractérisée** par le fait que le boîtier d'accumulateur et le puits d'accumulateur (28) sont équipés de surfaces de guidage (détrompage) complémentaires.
